# EUROPÄISCHE PATENTSCHRIFT

(11) **EP 2 912 424 B1**
(45) Veröffentlichungstag und Bekanntmachung des Hinweises auf die Patenterteilung: **31.01.2018**
(21) Anmeldenummer: 13766945.3
(22) Anmeldetag: 23.09.2013
(51) Int. Cl.: G01K 1/08, G01K 7/18

(54) **HOCHTEMPERATURCHIP MIT HOHER STABILITÄT**
HIGH-TEMPERATURE CHIP WITH HIGH STABILITY
PUCE HAUTE TEMPÉRATURE À STABILITÉ ÉLEVÉE

(30) Priorität: 25.10.2012 DE 102012110210
(43) Veröffentlichungstag der Anmeldung: 02.09.2015
(73) Patentinhaber: Heraeus Sensor Technology GmbH, 63450 Hanau (DE)
(72) Erfinder: WIENAND, Karlheinz, 63741 Aschaffenburg (DE); ZINKEVICH, Matsvei, 63773 Goldbach (DE); SANDER, Margit, 63791 Karlstein (DE)
(74) Vertreter: Schultheiss & Sterzel Patentanwälte PartG mbB
(86) Internationale Anmeldenummer: PCT/EP2013/069696
(87) Internationale Veröffentlichungsnummer: WO 2014/063877

(56) Entgegenhaltungen:
- DE-A1- 19 834 276
- DE-A1- 19 934 110
- DE-A1-102007 023 434
- DE-A1-102007 046 900
- DE-A1-102009 007 940
- DE-A1-102009 028 634
- US-A- 5 332 991

## Beschreibung

Die Erfindung betrifft einen Temperatursensor, insbesondere Hochtemperatursensor aufweisend ein Substrat, zumindest eine Widerstandsstruktur und zumindest zwei Anschlusskontakte, wobei die Anschlusskontakte die Widerstandsstruktur elektrisch kontaktieren.

Solche Temperatursensoren werden in der Automobilbranche zur Messung der Abgastemperatur und/oder Verbrennungstemperatur von Motorgasen verwendet. Die Messung soll häufig möglichst dicht am Motor erfolgen. Daher müssen solche Sensoren die hohen Temperaturen der Verbrennungsgase aushalten. Temperatursensoren mit einer ebenen Widerstandsstruktur sind beispielsweise aus der DE 197 42 696 A1 bekannt.

Es wurden im Stand der Technik einige Vorschläge gemacht, wie solche hochtemperaturstabilen Temperatursensoren aufgebaut werden können. So wurde mit der DE 10 2007 046 900 B4 ein Sensor mit einem selbstragenden Deckel als Schutz für eine Platin-Widerstandsstruktur vorgeschlagen. Aus der DE 10 2009 007 940 B4 ist ein weiterer Hochtemperatursensor bekannt, bei dem das Substrat Zirkonoxid enthält. Um einer Vergiftung mit Ionen vorzubeugen, die für die Platin-Schichtwiderstandsstruktur schädlich sind, wird mit der DE 10 2011 051 845 B4 vorgeschlagen, zusätzlich Opferelektroden auf das Substrat aufzutragen. Die DE 199 34 110 A1 offenbart einen Temperaturfühler, bei dem eine Widerstandsstruktur sandwichartig zwischen zwei Tapes eingeschlossen wird. Aus der US 5 332 991 A ist ein Temperatursensor mit Schutzelektroden bekannt.

Die genannten Maßnahmen sind zur Ausbildung eines Temperatursensors geeignet, der bei hohen Temperaturen arbeitet. Die Anwendung bei hohen Temperaturen führt jedoch dazu, dass insbesondere bei der Abkühlung der Temperatursensoren häufig sehr hohe Temperaturgradienten auftreten. Zur Motorsteuerung und Motorregelung werden gleichzeitig immer schnellere Reaktionszeiten der Temperatursensoren gefordert. Gleichzeitig sollen die Temperatursensoren auch sehr hohe Temperaturen von bis zu 1.100° C aushalten, ohne dass es dabei zu einer Zerstörung oder zu einer Drift des Temperatursensors kommt. Es besteht also weiterhin ein Bedürfnis einen Temperatursensor zur Verfügung zu stellen, der bei solchen hohen Temperaturen und auch bei den häufig auftretenden Temperaturwechseln zuverlässig arbeitet, ohne dass sich die Messcharakteristik des Temperatursensors über die Zeit zu stark und zu schnell verschiebt.

Die Aufgabe der Erfindung besteht also darin, die Nachteile des Stands der Technik zu überwinden. Insbesondere soll ein Temperatursensor zur Verfügung gestellt werden, der zuverlässig und lange bei hohen Temperaturen auch bei gleichzeitig schnellen Temperaturwechseln arbeitet. Dazu soll die Drift des Sensors bei der Messung möglichst gering gehalten werden.

Die Aufgaben der Erfindung werden gelöst durch einen Temperatursensor, insbesondere Hochtemperatursensor, aufweisend ein beschichtetes Substrat, zumindest eine Widerstandsstruktur und zumindest zwei Anschlusskontakte, wobei die Anschlusskontakte die Widerstandsstruktur elektrisch kontaktieren, das Substrat aus Zirkoniumoxid oder einer Zirkoniumoxidkeramik besteht, wobei das Zirkoniumoxid oder das Zirkoniumoxid in der Zirkoniumoxidkeramik mit Oxiden eines dreiwertigen und eines fünfwertigen Metalls stabilisiert ist, wobei das Substrat mit Isolationsschicht beschichtet ist, die Widerstandsstruktur und die freien Bereiche der Isolationsschicht, auf denen keine Widerstandsstruktur angeordnet ist, zumindest bereichsweise mit einer keramischen Zwischenschicht beschichtet sind und auf der keramischen Zwischenschicht eine Schutzschicht und/oder ein Deckel angeordnet ist, wobei das Zirkoniumoxid oder das Zirkoniumoxid in der Zirkoniumoxidkeramik mit Oxiden eines dreiwertigen und eines fünfwertigen Metalls stabilisiert ist und zumindest an einem Anschlusskontakt zumindest eine Elektrode neben der Widerstandsstruktur auf der Isolationsschicht angeordnet ist, wobei die Elektrode oder die Elektroden einteilig mit der Widerstandsstruktur ausgebildet ist oder sind.

Die Stabilisierung des Zirkoniumoxids oder des Zirkoniumoxids in der Zirkoniumoxidkeramik ist als eine strukturelle Stabilisierung zu verstehen, bei der eine bestimmte Kristallstruktur stabilisiert wird.

Durch die Stabilisierung der Kristallstruktur mit drei- und fünfwertigen Metalloxiden kann die thermische Expansion des Substrats an die thermische Expansion der Zwischenschicht und der Edelmetalle der Widerstandstruktur angepasst werden. Dadurch kann eine thermisch induzierte Spannung in der Widerstandsstruktur vermieden beziehungsweise verringert werden.

Dabei kann vorgesehen sein, dass die Widerstandsstruktur vollständig mit der keramischen Zwischenschicht beschichtet ist, wobei vorzugsweise zumindest die an die Widerstandsstruktur angrenzenden Bereiche der Isolationsschicht bedeckt sind.

Hierdurch wird ein besonders effektiver Schutz der Widerstandstruktur erreicht.

Es kann auch vorgesehen sein, dass die Widerstandsstruktur Mäander aufweist, wobei die keramische Zwischenschicht die freien Bereiche der Isolationsschicht zwischen den Mäandern bedeckt.

Hierdurch gelingt es die Widerstandsschicht besonders fest in der Isolationsschicht und der Zwischenschicht zu verankern und dadurch den gesamten Sensor auch bei hohen Temperaturen und schnellen Temperaturwechseln stabil zu halten.

Es kann erfindungsgemäß bevorzugt auch vorgesehen sein, dass das Zirkoniumoxid oder das Zirkoniumoxid in der Zirkoniumoxidkeramik mit Oxiden eines dreiwertigen und eines fünfwertigen Metalls stabilisiert ist, vorzugsweise mit 5 bis 20 Mol% der Oxide.

Als Oxide eines dreiwertigen Metalls wird besonders bevorzugt Yttriumoxid verwendet. Als Oxide eines fünfwertigen Metalls werden besonders bevorzugt Tantaloxid und/oder Nioboxid verwendet. Geeignete Mischungen sind beispielsweise aus der EP 0 115 148 B1 bekannt.

Es ist erfindungsgemäß vorgesehen, dass zumindest an einem Anschlusskontakt zumindest eine Elektrode neben der Widerstandsstruktur auf der Isolationsschicht angeordnet ist, vorzugsweise an beiden Anschlusskontakten jeweils eine Elektrode neben der Widerstandsstruktur auf der Isolationsschicht angeordnet ist, wobei die Elektrode oder die Elektroden einteilig mit der Widerstandsstruktur ausgebildet ist oder sind.

Solche Opferelektroden erhöhen die Lebensdauer des Temperatursensors, indem sie für die Widerstandsstruktur schädliche Ionen abfangen.

Besonders bevorzugt kann auch vorgesehen sein, dass die Isolationsschicht eine Metalloxidschicht ist, vorzugsweise eine Aluminiumoxidschicht ist.

Es kann dabei auch eine Mischung verschiedener Metalloxide für die Metalloxidschicht verwendet werden. Die Beschichtung des Substrats mit Metalloxid kann durch eine Metalloxidkeramik realisiert werden.

Die der Erfindung zugrunde liegenden Aufgaben werden auch gelöst durch einen Temperatursensor, insbesondere Hochtemperatursensor, aufweisend ein Substrat, zumindest eine Widerstandsstruktur und zumindest zwei Anschlusskontakte, wobei die Anschlusskontakte die Widerstandsstruktur elektrisch kontaktieren und zumindest an einem Anschlusskontakt zumindest eine Elektrode neben der Widerstandsstruktur auf dem Substrat angeordnet ist, wobei die Elektrode oder die Elektroden einteilig mit der Widerstandsstruktur ausgebildet ist oder sind, wobei die Widerstandsstruktur und die freien Bereiche des Substrats, auf denen die Widerstandsstruktur nicht angeordnet ist, zumindest bereichsweise mit einer keramischen Zwischenschicht beschichtet sind und auf der keramischen Zwischenschicht eine Schutzschicht und/oder ein Deckel angeordnet ist, wobei die keramische Zwischenschicht porös ist und zumindest zwei Seiten der Widerstandsstruktur von zumindest zwei Elektroden umrahmt sind.

Die Kombination der Opferelektroden mit der Zwischenschicht liefert einen besonders robusten und gegen schädliche chemische Einflüsse langlebigen Temperatursensor. Die Opferelektroden ermöglichen den Betrieb bei hohen Temperaturen und die Zwischenschicht ermöglicht zusätzlich, dass der Temperatursensor die schnellen Temperaturwechsel aushält.

Bei solchen und den vorherigen Temperatursensoren kann erfindungsgemäß vorgesehen sein, dass die Elektrode oder die Elektroden die Widerstandsstruktur zumindest bereichsweise umrahmt oder umrahmen, insbesondere zumindest eine Seite von einer Elektrode umrahmt ist, vorzugsweise zumindest zwei Seiten der Widerstandsstruktur von zumindest zwei Elektroden umrahmt sind, ganz besonders bevorzugt zwei gegenüberliegende Seiten der Widerstandsstruktur von zwei Elektroden umrahmt sind.

Hierdurch wird eine besonders gute Schutzwirkung erzielt.

Erfindungsgemäße Temperatursensoren können sich auch dadurch auszeichnen, dass die keramische Zwischenschicht porös ist, bevorzugt die keramische Zwischenschicht eine Porosität von 1% bis 20% aufweist, bevorzugt eine Porosität von 5% bis 15%, besonders bevorzugt eine Porosität von 10%.

Durch die Porosität wird die thermische Expansion der Zwischenschicht auf die thermische Expansion des Substrats beziehungsweise der Isolierungsschicht des Substrats, das heißt, des stabilisierten Zirkoniumoxids oder der stabilisierten Zirkoniumoxidkeramik beziehungsweise des Metalloxids der Isolierungsschicht angepasst.

Gemäß einer Weiterbildung der Erfindung kann vorgesehen sein, dass die keramische Zwischenschicht eine Dicke zwischen 1 µm und 50 µm aufweist, bevorzugt die keramische Zwischenschicht eine Dicke zwischen 4 µm und 10 µm aufweist.

Diese Dicken sind ausreichend, um eine Deckschicht und gegebenenfalls auch einen Deckel auf der Zwischenschicht anzuordnen, ohne dass es, aufgrund der unterschiedlichen thermischen Ausdehnung zu einem Abplatzen der Zwischenschicht, der Deckschicht oder des Deckels kommt.

Des Weiteren kann vorgesehen sein, dass die Schutzschicht aus Glas besteht und/oder der Deckel ein keramisches Plättchen ist.

Das Glas kann dabei insbesondere auch zur Befestigung des Deckels verwendet werden.

Auch kann bevorzugt vorgesehen sein, dass die Widerstandsstruktur aus Platin oder einer Platinlegierung, insbesondere einer Platinbasislegierung besteht.

Platin oder Platinlegierungen sind zur Herstellung von Hochtemperatursensoren besonders gut geeignet.

Die Aufgaben der Erfindung werden schließlich auch gelöst durch die Verwendung eines erfindungsgemäßen Temperatursensors in einem Abgassystem zur Steuerung und/oder Regelung eines Motors, insbesondere eines Kraftfahrzeugmotors.

Der Erfindung liegt die überraschende Erkenntnis zugrunde, dass es durch die Beschichtung des Substrats und durch die Beschichtung des Widerstandsmäanders mit einer Zwischenschicht gelingt, den Widerstandsmäander auch bei hohen Temperaturen und starken Temperaturänderungen stabil zu halten. Besonders bei Verwendung einer porösen Zwischenschicht kann ein besonders stabiler Temperatursensor hergestellt werden.

Im Folgenden werden Ausführungsbeispiele der Erfindung anhand von einer schematisch dargestellten Figur erläutert, ohne jedoch dabei die Erfindung zu beschränken.

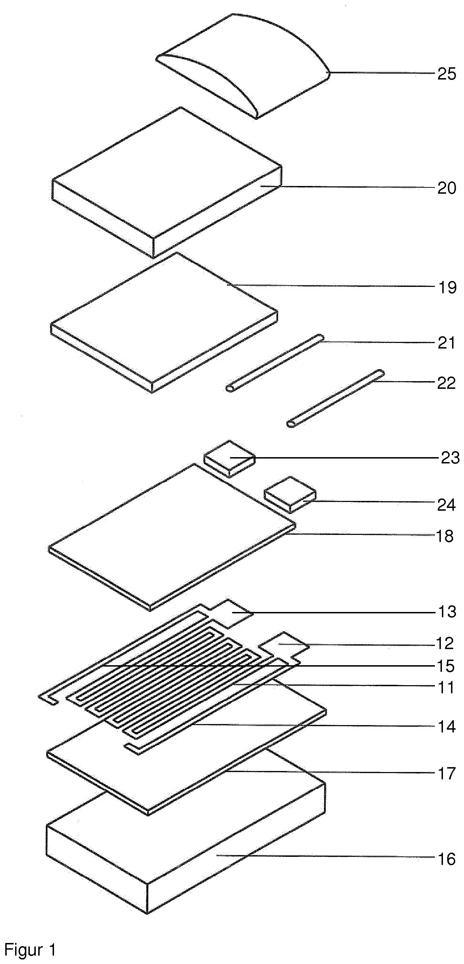

Die Figur 1 zeigt eine schematische Explosionsdarstellung eines erfindungsgemäßen Temperatursensors. Eine mäanderförmige schichtförmige Widerstandsstruktur 11 ist mit zwei Anschlusskontakten 12, 13 elektrisch verbunden. Die Widerstandsstruktur 11 wird auf etwas mehr als zwei Seiten von zwei Elektroden 14, 15 umrahmt. Der in Figur 1 gezeigte Temperatursensor umfasst also zwei Elektroden 14, 15, die jede an einem der Anschlusskontakte 12, 13 angeschlossen ist.

Die Elektroden 14, 15 sind mit den beiden Anschlusskontakte 12, 13 verbunden und dienen als Opferelektroden zum Schutz der Widerstandsstruktur 11. Von den in Figur 1 gezeigten Elektroden 14, 15 wird eine nach erfolgtem elektrischen Anschluss zur Kathode, die die als Temperaturmesswiderstand vorgesehene Widerstandsstruktur 11 vor eindringenden elektrochemischen Verunreinigungen schützt. Dies vereinfacht den Verbau des Temperatursensors, da kein falsches Anschließen (Verpolung) möglich ist. Die Drift des Messwiderstands wird somit unabhängig von den elektrischen Anschlüssen drastisch verringert. Besonders vorteilhaft ist an dieser Ausführungsform, dass auch die Polung und das Potential des Gehäuses beliebig sind.

Ein Substrat 16, das aus einem stabilisiertem Zirkonoxid oder einer Zirkonoxidkeramik aus stabilisiertem Zirkonoxid besteht , ist mit einer isolierenden Schicht 17 aus Aluminiumoxid beschichtet, durch die sichergestellt wird, dass die Widerstandsstruktur 11 durch das bei hohen Temperaturen leitfähige Zirkonoxid nicht kurzgeschlossen wird und dass eine schädliche Wechselwirkung zwischen dem Zirkonoxid und dem Platinmäander 11 unterbunden wird. Die Widerstandstruktur 11, die Anschlusskontakte 12, 13 und die Elektroden 14, 15 sind als einteilige Struktur auf der Al₂O₃Beschichtung 17 des ZrO₂-Substrats 16 aufgebracht. Die Herstellung der Widerstandsstruktur 11 erfolgt in einem Arbeitsschritt, beispielsweise durch ein photolithographisches Verfahren. Die gesamte Struktur kann also beispielsweise als Dünnschicht auf einer ebenen Oberfläche der Al₂O₃-Beschichtung 17 des stabilisiertem Zirkonoxids oder der Zirkonoxidkeramik aus stabilisiertem Zirkonoxid 16 angeordnet sein. Die Anschlusskontakte 12, 13 bestehen dabei aus dem gleichen Werkstoff wie die Widerstandsstruktur 11 und die Elektroden 14, 15. Als Werkstoff wird vorzugsweise Platin oder eine Platinlegierung verwendet.

Die Widerstandsstruktur 11 ist auf ihrer dem Substrat 16 abgewandten Seite mit einer Diffusionssperrschicht 18 als Zwischenschicht versehen, welche ihrerseits mit einer Passivierungsschicht 19 aus Glas oder Glaskeramik und einem Deckel 20 abgedeckt ist.

Aufgrund des Deckels 20 wird die empfindsame Struktur der Platin enthaltenden Widerstandsstruktur 11 gegen atmosphärische Vergiftungen der Umgebung wirksam geschützt. In einem solchen Mehrschichtenaufbau werden bei hoher Reinheit der Keramik- und Glaskomponenten der Glaskeramik 19 die für die Widerstandsstruktur 11 aus Platin besonders schädlichen Kationen vermieden, welche Platin sehr rasch bei hohen Temperaturen durch Wanderung im elektrischen Feld kontaminieren würden und damit die Temperatur/Widerstands-Funktion der sich daraus ergebenden Platinlegierung drastisch negativ beeinflussen würden, so dass die Hochtemperaturbeständigkeit der Widerstandsstruktur 11 für Temperaturmessungen nicht mehr gegeben wäre. Aufgrund der ersten thermodynamisch stabilen und reinen Hafnium- oder Aluminiumoxidschicht als Zwischenschicht 18 beziehungsweise Diffusionsbarriere 18 wird der Zutritt von Silizium und anderen das Platin vergiftenden Substanzen beziehungsweise Ionen maßgeblich minimiert. Somit ist die beispielsweise mäanderförmig strukturierte Widerstandsstruktur 11 nicht nur von der Substratseite her sondern auch von der diesbezüglich gegenüberliegenden Seite vor Vergiftung geschützt. Die Aufbringung der Zwischenschicht beziehungsweise Diffusionsbarriere 18 kann durch physikalisches Aufdampfen erreicht werden.

Vorzugsweise wird die Keramikschicht 18 überstöchiometrisch in einer Weise so aufgebracht, dass eine sehr stabile Schicht von reinem Aluminiumoxid (Al₂O₃) die Platinstruktur der Widerstandsstruktur 11 abdeckt. Die Silizium aufweisende Passivierungsschicht 19 aus Glaskeramik erhält somit nur minimalen Kontakt mit der aktiven Platin-Widerstandsstruktur 11 und eine Abdichtung der Widerstandsstruktur 11 als mechanischer Schutz gegenüber äußeren kontaminierenden Elementen ist damit gewährleistet.

Die Zwischenschicht 18 wird derart aufgebracht, dass eine geringe Porosität von circa 10% in der Zwischenschicht 18 vorhanden ist. Durch eine geeignete Porosität der Zwischenschicht 18 wird die thermische Expansion der Zwischenschicht 18 an die thermische Expansion der ZrO₂-Beschichtung 17 angepasst. Dadurch ist der Widerstandsmäander 11 in die ZrO₂-Beschichtung 17 und die Zwischenschicht 18 eingebettet. Es wurde erfindungsgemäß gefunden, dass hierdurch ein besonders temperaturstabiler Temperatursensor aufgebaut werden kann, der auch viele und besonders schnelle Temperaturwechsel bei hoher Temperatur auszuhalten vermag. Während herkömmliche solche Temperatursensoren nur circa 500 schneller Temperaturwechsel bei 1.000° C oder sogar dicht darüber aushalten, ist es mit dem erfindungsgemäßen Aufbau möglich circa 5.000 schnelle Temperaturwechsel bei diesen Temperaturen zu messen, ohne dass es zu einer zu starken Drift oder einer Zerstörung des Temperatursensors kommt.

Gemäß Figur 1 wird auf der Glaskeramik 19 ein Keramikplättchen 20 aufgebracht. Das Keramikplättchen 20 stellt eine zusätzliche Passivierung dar und wirkt als mechanischer "Schutzschild" gegen Abrasion durch Teilchen in dem Gehäuse in dem der eigentliche Temperatursensor gefügt ist. Dies schützt vor mechanischem Abrieb und elektrochemischen Verunreinigungen. Auf das Keramikplättchen 20 kann erfindungsgemäß aber auch verzichtet werden.

In einer Ausführung nach Figur 1 sind die Anschlusskontakte 12, 13 des Temperatursensors mit Anschlussdrähten 21 und 22 über Anschlusspads 23 und 24 mit einem elektrisch isolierenden Fixiertropfen 25 zugentlastet. Diese Fixierung 25 besteht aus hochreinem Glas oder Glaskeramik.

Ergänzend zur eingangs erwähnten Ausführungsform der Zwischensicht als Diffusionsbarriere 18 sei angemerkt, dass diese entweder im Dünnschichtverfahren mit einer Dicke im Bereich von 0,2 bis 10 µm, vorzugsweise 5 µm, oder im Dickschichtverfahren mit einer Dicke im Bereich von 5 bis 50 µm, vorzugsweise 15 µm aufgebracht wird.

Die Dicke der Anschlusskontakt-Pads 23, 24 an der Widerstandsstruktur 11 liegt im Bereich von 10 bis 50 µm, vorzugsweise bei 20 µm. Der Substrat 16 als Träger weist eine Dicke im Bereich von 0,1 mm bis 1 mm, vorzugsweise bei 0,4 mm, besonders bevorzugt 0,38 mm auf.

Die Anschlusskontakte 12, 13 sind jeweils auf einer Seite angeordnet; es ist darüber hinaus jedoch auch möglich, Ausführungsformen eines erfindungsgemäßen temperaturabhängigen Widerstands, beziehungsweise Temperatursensors, vorzugsweise Hochtemperatursensors einzusetzen, bei denen beide Anschlusskontakte 12, 13 jeweils auf sich gegenüber liegenden Seiten angeordnet sind.

Wie in Figur 1 zu erkennen ist, erfolgt nach dem Auftragen der Al₂O₃-Schicht 18 als Zwischenschicht 18 das Auftragen der Glaskeramik 19 und dann das Auftragen von Anschlusspads 22, 23 als Dickschichten und anschließend die Keramikabdeckung 20. Danach werden die Anschlussdrähte 21, 22 angeschlossenen und eine Fixierung 25 zur Zugentlastung der Anschlussdrähte 21, 22 aufgebracht.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 11: Widerstandsstruktur
- 12: Anschlusskontakt / Kathode
- 13: Anschlusskontakt / Anode
- 14, 15: Elektrode
- 16: Stabilisiertes ZrO₂-Substrat
- 17: Aluminiumoxid-Isolationsschicht
- 18: Zwischenschicht / poröse Aluminiumoxidschicht
- 19: Passivierungsschicht / Glaskeramik
- 20: Deckel / Keramik
- 21, 22: Anschlussdraht
- 23, 24: Anschlusspads
- 25: Fixierung / Zugentlastung

## Patentansprüche

1. Temperatursensor, insbesondere Hochtemperatursensor, aufweisend ein beschichtetes Substrat (16), zumindest eine Widerstandsstruktur (11) und zumindest zwei Anschlusskontakte (12, 13), wobei die Anschlusskontakte (12, 13) die Widerstandsstruktur (11) elektrisch kontaktieren, wobei das Substrat (16) mit einer Isolationsschicht (17) beschichtet ist, die Widerstandsstruktur (11) und die freien Bereiche der Isolationsschicht (17), auf denen keine Widerstandsstruktur (11) angeordnet ist, zumindest bereichsweise mit einer keramischen Zwischenschicht (18) beschichtet sind und auf der keramischen Zwischenschicht (18) eine Schutzschicht (19) und/oder ein Deckel (20) angeordnet ist, **dadurch gekennzeichnet, dass**
das Substrat (16) aus Zirkoniumoxid oder einer Zirkoniumoxidkeramik besteht, wobei das Zirkoniumoxid oder das Zirkoniumoxid in der Zirkoniumoxidkeramik mit Oxiden eines dreiwertigen und eines fünfwertigen Metalls stabilisiert ist und zumindest an einem Anschlusskontakt (12, 13) zumindest eine Elektrode (14, 15) neben der Widerstandsstruktur (11) auf der Isolationsschicht (17) angeordnet ist, wobei die Elektrode (14, 15) oder die Elektroden (14, 15) einteilig mit der Widerstandsstruktur (11) ausgebildet ist oder sind.

2. Temperatursensor nach Anspruch 1, **dadurch gekennzeichnet, dass**
die Widerstandsstruktur (11) vollständig mit der keramischen Zwischenschicht (18) beschichtet ist, wobei vorzugsweise zumindest die an die Widerstandsstruktur (11) angrenzenden Bereiche der Isolationsschicht (17) mit der keramischen Zwischenschicht (18) bedeckt sind.

3. Temperatursensor nach Anspruch 1 oder 2, **dadurch gekennzeichnet, dass**
die Widerstandsstruktur (11) Mäander aufweist, wobei die keramische Zwischenschicht (18) die freien Bereiche der Isolationsschicht (17) zwischen den Mäandern bedeckt.

4. Temperatursensor nach einem der vorangehenden Ansprüche, **dadurch gekennzeichnet, dass**
das Zirkoniumoxid oder das Zirkoniumoxid in der Zirkoniumoxidkeramik mit Oxiden eines dreiwertigen und eines fünfwertigen Metalls stabilisiert ist, vorzugsweise mit 5 bis 20 Mol% der Oxide.

5. Temperatursensor nach einem der vorangehenden Ansprüche, **dadurch gekennzeichnet, dass**
an beiden Anschlusskontakten (12, 13) jeweils eine Elektrode (14, 15) neben der Widerstandsstruktur (11) auf der Isolationsschicht (17) angeordnet ist, wobei die Elektroden (14, 15) einteilig mit der Widerstandsstruktur (11) ausgebildet sind.

6. Temperatursensor nach einem der vorangehenden Ansprüche, **dadurch gekennzeichnet, dass**
die Isolationsschicht (17) eine Metalloxidschicht (17) ist, vorzugsweise eine Aluminiumoxidschicht (17) ist.

7. Temperatursensor, insbesondere Hochtemperatursensor, aufweisend ein Substrat (16), zumindest eine Widerstandsstruktur (11) und zumindest zwei Anschlusskontakte (12, 13), wobei die Anschlusskontakte (12, 13) die Widerstandsstruktur (11) elektrisch kontaktieren und zumindest an einem Anschlusskontakt (12, 13) zumindest eine Elektrode (14, 15) neben der Widerstandsstruktur (11) auf dem Substrat (16) angeordnet ist, wobei die Elektrode (14, 15) oder die Elektroden (14, 15) einteilig mit der Widerstandsstruktur (11) ausgebildet ist oder sind, wobei die Widerstandsstruktur (11) und die freien Bereiche des Substrats (16), auf denen die Widerstandsstruktur (11) nicht angeordnet ist, zumindest bereichsweise mit einer keramischen Zwischenschicht (18) beschichtet sind und auf der keramischen Zwischenschicht (18) eine Schutzschicht (19) und/oder ein Deckel (20) angeordnet ist, **dadurch gekennzeichnet, dass**
die keramische Zwischenschicht (18) porös ist und zumindest zwei Seiten der Widerstandsstruktur (11) von zumindest zwei Elektroden (14, 15) umrahmt sind.

8. Temperatursensor nach Anspruch 7, **dadurch gekennzeichnet, dass** zwei gegenüberliegende Seiten der Widerstandsstruktur (11) von zwei Elektroden (14, 15) umrahmt sind.

9. Temperatursensor nach einem der Ansprüche 1 bis 6, **dadurch gekennzeichnet, dass**
die Elektrode (14, 15) oder die Elektroden (14, 15) die Widerstandsstruktur (11) zumindest bereichsweise umrahmt oder umrahmen, insbesondere zumindest eine Seite von einer Elektrode (14, 15) umrahmt ist, vorzugsweise zumindest zwei Seiten der Widerstandsstruktur (11) von zumindest zwei Elektroden (14, 15) umrahmt sind, ganz besonders bevorzugt zwei gegenüberliegende Seiten der Widerstandsstruktur (11) von zwei Elektroden (14, 15) umrahmt sind.

10. Temperatursensor nach einem der Ansprüche 1 bis 6 oder 9, **dadurch gekennzeichnet, dass**
die keramische Zwischenschicht (18) porös ist, bevorzugt die keramische Zwischenschicht (18) eine Porosität von 1% bis 20% aufweist, bevorzugt eine Porosität von 5% bis 15%, besonders bevorzugt eine Porosität von 10%.

11. Temperatursensor nach einem der vorangehenden Ansprüche, **dadurch gekennzeichnet, dass**
die keramische Zwischenschicht (18) eine Porosität von 1% bis 20% aufweist, bevorzugt eine Porosität von 5% bis 15%, besonders bevorzugt eine Porosität von 10%.

12. Temperatursensor nach einem der vorangehenden Ansprüche, **dadurch gekennzeichnet, dass**
die keramische Zwischenschicht (18) eine Dicke zwischen 1 µm und 50 µm aufweist, bevorzugt die keramische Zwischenschicht (18) eine Dicke zwischen 4 µm und 10 µm aufweist.

13. Temperatursensor nach einem der vorangehenden Ansprüche, **dadurch gekennzeichnet, dass**
die Schutzschicht (19) aus Glas besteht und/oder der Deckel (20) ein keramisches Plättchen ist.

14. Temperatursensor nach einem der vorangehenden Ansprüche, **dadurch gekennzeichnet, dass**
die Widerstandsstruktur (11) aus Platin oder einer Platinlegierung, insbesondere einer Platinbasislegierung besteht.

15. Verwendung eines Temperatursensors nach einem der vorangehenden Ansprüche in einem Abgassystem zur Steuerung und/oder Regelung eines Motors, insbesondere eines Kraftfahrzeugmotors.

## Claims

1. A temperature sensor, in particular a high-temperature sensor, having a coated substrate (16), at least one resistor structure (11) and at least two connection contacts (12, 13), wherein the connection contacts (12, 13) electrically contact the resistor structure (11), wherein the substrate (16) is coated with an insulation layer (17) and the resistor structure (11) and the free regions of the insulation layer (17), on which no resistor structure (11) is disposed, are coated, at least in certain regions, with a ceramic intermediate layer (18), and a protective layer (19) and/or a cover (20) is disposed on the ceramic intermediate layer (18), **characterized in that**
the substrate (16) is made of zirconium oxide or a zirconium oxide ceramic, wherein the zirconium oxide or the zirconium oxide in the zirconium oxide ceramic is stabilized with oxides of a trivalent and a pentavalent metal and at least one electrode (14, 15) is disposed at least at one connection contact (12, 13), alongside the resistor structure (11) on the insulation layer (17), wherein the electrode (14, 15) or the electrodes (14, 15) is or are formed integrally with the resistor structure (11).

2. The temperature sensor according to claim 1, **characterized in that**
the resistor structure (11) is completely coated with the ceramic intermediate layer (18), wherein, preferably, at least the regions of the insulation layer (17) adjacent to the resistor structure (11) are covered with the ceramic intermediate layer (18).

3. The temperature sensor according to claim 1 or 2, **characterized in that**
the resistor structure (11) comprises meanders, wherein the ceramic intermediate layer (18) covers the free regions of the insulation layer (17) between the meanders.

4. The temperature sensor according to any one of the preceding claims, **characterized in that**
the zirconium oxide or the zirconium oxide in the zirconium oxide ceramic is stabilized with oxides of a trivalent and a pentavalent metal, preferably with 5 to 20 mol % of the oxides.

5. The temperature sensor according to any one of the preceding claims, **characterized in that**
one electrode (14, 15) is disposed, at each of both connection contacts (12, 13), alongside the resistor structure (11) on the insulation layer (17), wherein the electrodes (14, 15) are formed integrally with the resistor structure (11).

6. The temperature sensor according to any one of the preceding claims, **characterized in that**
the insulation layer (17) is a metal oxide layer (17), preferably an aluminum oxide layer (17).

7. A temperature sensor, in particular a high-temperature sensor, having a substrate (16), at least one resistor structure (11) and at least two connection contacts (12, 13), wherein the connection contacts (12, 13) electrically contact the resistor structure (11) and at least one electrode (14, 15) is disposed at least at one connection contact (12, 13), alongside the resistor structure (11) on the substrate (16), wherein the electrode (14, 15) or the electrodes (14, 15) is or are formed integrally with the resistor structure (11), wherein the resistor structure (11) and the free regions of the substrate (16), on which the resistor structure (11) is not disposed, are coated at least in certain regions with a ceramic intermediate layer (18), and a protective layer (19) and/or a cover (20) is disposed on the ceramic intermediate layer (18), **characterized in that** the ceramic intermediate layer (18) is porous and at least two sides of the resistor structure (11) are framed by at least two electrodes (14, 15).

8. The temperature sensor according to claim 7, **characterized in that**
two opposing sides of the resistor structure (11) are framed by two electrodes (14, 15).

9. The temperature sensor according to one of claims 1 to 6, **characterized in that**
the electrode (14, 15) or electrodes (14, 15) frames or frame the resistor structure (11) at least in certain regions, in particular at least one side is framed by an electrode (14, 15), preferably at least two sides of the resistor structure (11) are framed by at least two electrodes (14, 15), very particularly preferably two opposing sides of the resistor structure (11) are framed by two electrodes (14, 15).

10. The temperature sensor according to any one of claims 1 to 6 or 9, **characterized in that**
the ceramic intermediate layer (18) is porous, preferably the ceramic intermediate layer (18) has a porosity of 1% to 20%, preferably a porosity of 5% to 15%, particularly preferably a porosity of 10%.

11. The temperature sensor according to any one of the preceding claims, **characterized in that**
the ceramic intermediate layer (18) has a porosity of 1% to 20%, preferably a porosity of 5% to 15%, particularly preferably a porosity of 10%.

12. The temperature sensor according to any one of the preceding claims, **characterized in that**
the ceramic intermediate layer (18) has a thickness between 1 µm and 50 µm, preferably the ceramic intermediate layer (18) has a thickness between 4 µm and 10 µm.

13. The temperature sensor according to any one of the preceding claims, **characterized in that**
the protective layer (19) is made of glass and/or the cover (20) is a ceramic platelet.

14. The temperature sensor according to any one of the preceding claims, **characterized in that**
the resistor structure (11) is made of platinum or a platinum alloy, in particular a platinum-based alloy.

15. The use of a temperature sensor according to any one of the preceding claims in an exhaust-gas system for controlling and/or regulating an engine, in particular a motor vehicle engine.

## Revendications

1. Capteur de température, notamment capteur de températures élevées, présentant un substrat (16) revêtu, au moins une structure de résistance (11) et au moins deux contacts de raccordement (12, 13), où les contacts de raccordement (12, 13) sont en contact électrique avec la structure de résistance (11), où le substrat (16) est revêtu d'une couche d'isolation (17), la structure de résistance (11) et les régions libres de la couche d'isolation (17), sur lesquelles aucune structure de résistance (11) n'est disposée, sont revêtues au moins partiellement avec une couche intermédiaire (18) en céramique et une couche de protection (19), et/ou un couvercle (20), est déposé(e) sur la couche intermédiaire (18) en céramique, **caractérisé en ce que** le substrat (16) est constitué d'oxyde de zirconium ou d'une céramique d'oxyde de zirconium, où l'oxyde de zirconium ou l'oxyde de zirconium dans la céramique d'oxyde de zirconium est stabilisé avec des oxydes d'un métal trivalent ou pentavalent et au moins une électrode (14, 15) est disposée au niveau d'au moins un contact de raccordement (12, 13), à côté de la structure de résistance (11), sur la couche d'isolation (17), où l'électrode (14, 15) ou les électrodes (14, 15) sont conçues ou sont d'un seul tenant avec la structure de résistance (11).

2. Capteur de température selon la revendication 1, **caractérisé en ce que**
la structure de résistance (11) est totalement revêtue avec la couche intermédiaire (18) en céramique, où, de préférence, au moins les régions limitrophes de la structure de résistance (11) de la couche d'isolation (17) sont recouvertes avec la couche intermédiaire (18) en céramique.

3. Capteur de température selon la revendication 1 ou 2, **caractérisé en ce que**
la structure de résistance (11) présente des méandres, où la couche intermédiaire (18) en céramique recouvre les régions libres de la couche d'isolation (17) entre les méandres.

4. Capteur de température selon l'une des revendications précédentes, **caractérisé en ce que**
l'oxyde de zirconium ou l'oxyde de zirconium dans la céramique d'oxyde de zirconium est stabilisé avec des oxydes d'un métal trivalent ou pentavalent, de préférence avec 5 à 20 % en moles des oxydes.

5. Capteur de température selon l'une des revendications précédentes, **caractérisé en ce**
**qu'**au niveau des deux contacts de raccordement (12, 13), respectivement, une électrode (14, 15) est disposée à côté de la structure de résistance (11) sur la couche d'isolation (17), où les électrodes (14, 15) sont conçues d'un seul tenant avec le structure de résistance (11).

6. Capteur de température selon l'une des revendications précédentes, **caractérisé en ce que**
la couche d'isolation (17) est une couche d'oxyde métallique, de préférence, une couche d'oxyde d'aluminium (17).

7. Capteur de température, notamment capteur de températures élevées, présentant un substrat (16), au moins une structure de résistance (11) et au moins deux contacts de raccordement (12, 13), où les contacts de raccordement (12, 13) sont en contact électrique avec la structure de résistance (11) et au moins au niveau d'un contact de raccordement (12, 13) au moins une électrode (14, 15) est disposée à côté de la structure de résistance (11) sur le substrat (16), où l'électrode (14, 15), ou les électrodes (14, 15), est conçue, ou sont conçues, d'un seul tenant avec la structure de résistance (11), où la structure de résistance (11) et les régions libres du substrat (16), sur lesquelles n'est pas disposée la structure de résistance (11), sont revêtues au moins partiellement avec une couche intermédiaire (18) en céramique, et une couche de protection (19), et/ou un couvercle (20), est disposé(e) sur la couche intermédiaire (18) en céramique, **caractérisé en ce que**
la couche intermédiaire (18) en céramique est poreuse et au moins deux côtés de la structure de résistance (11) sont entourés d'au moins deux électrodes (14, 15).

8. Capteur de température selon la revendication 7, **caractérisé en ce que** deux côtés de la structure de résistance (11) situés l'un en face de l'autre sont entourés par deux électrodes (14, 15).

9. Capteur de température selon l'une des revendications 1 à 6, **caractérisé en ce que** l'électrode (14, 15), ou les électrodes (14, 15), entoure, ou entourent, au moins partiellement la structure de résistance (11), de préférence, au moins deux côtés de la structure de résistance (11) sont entourés par au moins deux électrodes (14, 15), de manière tout particulièrement préférée, deux côtés situés l'un en face de l'autre de la structure de résistance (11) sont entourés de deux électrodes (14, 15).

10. Capteur de température selon l'une des revendications 1 à 6 ou 9, **caractérisé en ce que**
la couche intermédiaire (18) en céramique est poreuse, de préférence, la couche intermédiaire (11) en céramique présente une porosité de 1 % à 20 %, de préférence, une porosité de 5 % à 15 %, de manière particulièrement préférée, une porosité de 10 %.

11. Capteur de température selon l'une des revendications précédentes, **caractérisé en ce que**
la couche intermédiaire (18) en céramique présente une porosité de 1 % à 20 %, de préférence, une porosité de 5 % à 15 %, de manière particulièrement préférée, une porosité de 10 %.

12. Capteur de température selon l'une des revendications précédentes, **caractérisé en ce que** la couche intermédiaire (18) en céramique présente une épaisseur entre 1 µm et 50 µm, de préférence, la couche intermédiaire (18) en céramique présente une épaisseur entre 4 µm et 10 µm.

13. Capteur de température selon l'une des revendications précédentes, **caractérisé en ce que**
la couche de protection (19) est constituée de verre et/ou le couvercle (20) est une plaquette en céramique.

14. Capteur de température selon l'une des revendications précédentes, **caractérisé en ce que**
la structure de résistance (11) est constituée de platine ou d'un alliage de platine, notamment d'un alliage à base de platine.

15. Utilisation d'un capteur de température selon l'une des revendications précédentes dans un système de gaz d'échappement pour la commande et/ou la régulation d'un moteur, notamment d'un moteur de véhicule automobile.
